# EUROPÄISCHE PATENTSCHRIFT

(11) **EP 3 676 675 B1**
(45) Veröffentlichungstag und Bekanntmachung des Hinweises auf die Patenterteilung: **03.01.2024**
(21) Anmeldenummer: 18810943.3
(22) Anmeldetag: 19.11.2018
(51) Int. Cl.: G05B 19/4097, B22F 3/105, B23K 26/03

(54) **VERFAHREN FÜR DEN ADDITIVEN AUFBAU EINER STRUKTUR UND COMPUTERPROGRAMMPRODUKT**
METHOD FOR THE ADDITIVE CONSTRUCTION OF A STRUCTURE AND COMPUTER PROGRAM PRODUCT
PROCÉDÉ D'INSTALLATION ADDITIVE D'UNE STRUCTURE ET PROGICIEL INFORMATIQUE

(30) Priorität: 19.12.2017 DE 102017223223
(43) Veröffentlichungstag der Anmeldung: 08.07.2020
(73) Patentinhaber: Siemens Energy Global GmbH & Co. KG, 81739 München (DE)
(72) Erfinder: GEISEN, Ole, 10781 Berlin (DE)
(86) Internationale Anmeldenummer: PCT/EP2018/081736
(87) Internationale Veröffentlichungsnummer: WO 2019/120810

(56) Entgegenhaltungen:
- EP-A1- 3 012 603
- WO-A1-2010/043274
- US-A1- 2017 052 534
- ENRIQUE SORIANO HERAS ET AL: "Plate auto-level system for fused deposition modelling (FDM) 3D printers", RAPID PROTOTYPING JOURNAL, Bd. 23, Nr. 2, 20. März 2017 (2017-03-20), Seiten 401-413, XP055547752, GB ISSN: 1355-2546, DOI: 10.1108/RPJ-06-2015-0065

## Beschreibung

Die vorliegende Erfindung betrifft ein Verfahren für den additiven Aufbau einer Struktur für ein Bauteil, ein entsprechendes Computerprogrammprodukt, eine Messvorrichtung und eine Fixierungsvorrichtung.

Das Bauteil ist vorzugsweise für den Einsatz in einer Strömungsmaschine, vorzugsweise im Heißgaspfad einer Gasturbine vorgesehen. Das Bauteil besteht vorzugsweise aus einer Nickelbasis- oder Superlegierung, insbesondere einer nickel- oder kobaltbasierten Superlegierung. Die Legierung kann ausscheidungs- oder dispersionsgehärtet sein.

Generative oder additive Herstellungsverfahren umfassen beispielsweise als Pulverbettverfahren das selektive Laserschmelzen (SLM) oder Lasersintern (SLS), oder das Elektronenstrahlschmelzen (EBM).

Ein Verfahren zum selektiven Laserschmelzen ist beispielsweise bekannt aus EP 2 601 006 B1. Ein Rapid-Prototyping-Verfahren bzw. Vorrichtungen und Verbesserungen solcher Verfahren sind weiterhin aus WO 2010/043274 A1 bekannt. Weiterhin enthält die Veröffentlichung "Plate auto-level system for fused deposition modelling (FDM) 3D printers", von Enrique Soriano Heras et al. im Rapid Prototyping Journal, Vol. 23/2 (2017) auf Seiten 401 bis 413 weitere Details zu den beschriebenen Verfahren. Noch weiterhin beschreibt die EP 3 012 603 A1 ein Verfahren und Computerprogramm zur Erfassung und Quantifizierung von Kenngrößen in einem Produktionsprozess.

Additive Fertigungsverfahren (englisch: "additive manufacturing") haben sich als besonders vorteilhaft für komplexe oder kompliziert oder filigran designte Bauteile, beispielsweise labyrinthartige Strukturen, Kühlstrukturen und/oder Leichtbau-Strukturen, erwiesen. Insbesondere ist die additive Fertigung durch eine besonders kurze Kette von Prozessschritten vorteilhaft, da ein Herstellungs- oder Fertigungsschritt eines Bauteils direkt auf Basis einer entsprechenden CAD-Datei erfolgen kann.

Weiterhin ist die additive Fertigung besonders vorteilhaft für die Entwicklung oder Herstellung von Prototypen, welche mittels konventioneller subtraktiver oder spanender Verfahren oder Gusstechnologie nicht oder nicht effizient hergestellt werden können.

Das vorliegende Verfahren betrifft ein hybrides Herstellungsverfahren, wobei mittels selektiven Laserschmelzens oder Elektronenstrahlschmelzens die Struktur auf einer vorgefertigten Komponente aufgebaut wird. Die Anwendung betrifft vorzugsweise Reparatur- bzw. Instandsetzungsprozesse von Bauteilen, insbesondere Turbinenteilen.

Um das Verfahren des selektiven Laserschmelzens oder auch das Elektronenstrahlschmelzen für die beschriebenen Anwendungen einzusetzen, ist eine genaue Ausrichtung zwischen einer Bauplatte bzw. einer darauf fixierten vorgefertigten Komponente und der neu aufzubringenden Struktur erforderlich, da ein Beschichter, welcher üblicherweise eine Bearbeitungsebene für den SLM-Prozess definiert, innerhalb enger Genauigkeitstoleranzen von wenigen Mikrometern arbeiten muss, um neues Pulver auf der Bearbeitungsebene (Pulverbett) aufzutragen.

Wenn beispielsweise die Bearbeitungsebene, auf der eine neue Pulverschicht aufgetragen werden soll, nicht genau parallel zu der Beschichtungsebene ist, welche durch eine Bewegung des Beschichters definiert wird, führt dies zu Geometrieabweichungen für die aufzubauende Struktur bzw. das ganze Bauteil. Weiterhin kann die Bauplatte im Falle einer mangelhaften Ausrichtung zu der aufgebauten Struktur bei Nachbearbeitungs- oder additiven Aufbauschritten nicht oder nur schwer zur Referenzierung des Herstellungsprozesses genutzt werden, da das Risiko von Kollisionen zwischen dem Beschichter bzw. einer Beschichtungsvorrichtung und der (vorgefertigten) Komponente besteht.

Es ist daher eine Aufgabe der vorliegenden Erfindung, Mittel anzugeben, welche den additiven Aufbau einer Struktur auf einer bereits vorgefertigten Komponente vereinfachen bzw. ermöglichen. Insbesondere ermöglichen oder vereinfachen die vorliegend beschriebenen Mittel eine genaue Ausrichtung zwischen einer Bearbeitungsfläche bzw. einer Beschichtungsfläche und einer Trennebene der Komponente.

Diese Aufgabe wird durch den Gegenstand der unabhängigen Patentansprüche gelöst. Vorteilhafte Ausgestaltungen sind Gegenstand der abhängigen Patentansprüche.

Ein Aspekt der vorliegenden Erfindung betrifft ein Verfahren für den additiven Aufbau einer Struktur für ein Bauteil umfassend das Bereitstellen einer vorgefertigten Komponente für das Bauteil auf einer Bauplatte. Die Komponente wird vorzugsweise auf der Bauplatte fixiert. Die Komponente weist vorzugsweise weiterhin eine Trennebene auf. Die Trennebene ist vorzugsweise eine ebene Fläche, welche gleichzeitig für den additiven Aufbau der Struktur herangezogen werden soll, sodass die Struktur (stoffschlüssig) über diese Ebene mit der Komponente verbunden wird. Die Trennfläche oder Trennebene wird vorzugsweise durch einen mechanischen Bearbeitungsschritt definiert oder freigelegt.

Das Verfahren umfasst weiterhin das Bereitstellen eines Pulverbettes aus einem Basismaterial für die Struktur.

Das Verfahren umfasst weiterhin das Annähern der Bauplatte an eine Beschichtungsvorrichtung oder einen Beschichter.

Das Verfahren umfasst weiterhin das Ausrichten der Bearbeitungsfläche, Bearbeitungsebene bzw. der Beschichtungsfläche und der Trennebene der Komponente zum Verhindern einer Kollision zwischen der Komponente und der Beschichtungsvorrichtung.

Das Verfahren umfasst weiterhin ein optisches Vermessen einer Oberfläche des Pulverbettes, beispielsweise mittels eines Streifenlichtscanners.

In einer Ausgestaltung wird die Oberfläche während der Beschichtung der Bearbeitungsfläche mit dem Basismaterial durch die Beschichtungsvorrichtung vermessen. Durch diese Ausgestaltung kann der Prozess des optischen Vermessens zeiteffizient und parallel zu dem Beschichtungsprozess erfolgen.

In einer Ausgestaltung wird die Oberfläche während einer Rückbewegung der Beschichtungsvorrichtung von dieser vermessen. Durch diese Ausgestaltung kann der Prozess des optischen Vermessens ebenfalls zeiteffizient und parallel zu dem Beschichtungsprozess erfolgen.

Die Oberfläche wird schichtweise während des additiven Aufbaus, vorzugsweise weitgehend vor oder nach einer jeden bestrahlten oder verfestigten Schicht, optisch vermessen. Durch diese Ausgestaltung können vorteilhafterweise der gesamte Aufbauprozess der Struktur überwacht, und zudem Kollisionen der Beschichtungsvorrichtung und Schäden an der ganzen additiven Herstellungsanlage verhindert werden. Weiterhin kann ein 3D-Modell der Komponente und/oder der Struktur erstellt und - z.B. als digitaler Zwilling - für weitere additive Aufbau- oder Reparaturverfahren verwendet werden.

In einer Ausgestaltung wird zum Ausrichten ein Winkel zwischen der Bearbeitungsfläche und der Trennebene ermittelt.

In einer Ausgestaltung wird der Winkel durch das optische Vermessen eines beispielsweise aus der Bearbeitungsfläche herausragenden Teils der Komponente ermittelt. Diese Ausgestaltung ermöglicht es auf zweckmäßige Weise, den Winkel zwischen der Bearbeitungfläche/Beschichtungsfläche und der Trennebene zu ermitteln.

In einer Ausgestaltung wird das Annähern der Bauplatte an die Beschichtungsvorrichtung mittels einer Lichtschranke durchgeführt.

In einer Ausgestaltung wird die Bauplatte für das Annähern derselben schrittweise angehoben, bis die genannte Lichtschranke gestört wird. Durch diese Ausgestaltung kann das Annähern besonders zweckmäßig und vorteilhaft durchgeführt werden.

In einer Ausgestaltung wird während des Vermessens ein Code in der Trennebene der Komponente optisch erkannt oder eingelesen, wobei der Code eine Information über eine Geometrie und/oder Ausrichtung der Komponente enthält. Durch diese Ausgestaltung kann eine Apparatur, Messvorrichtung oder Hardware, die zum optischen Vermessen der Oberfläche des Pulverbettes eingerichtet ist, gleichzeitig zur Automatisierung des additiven Herstellungsverfahrens beitragen und den Code beispielsweise in eine entsprechende Datenverarbeitungseinrichtung einlesen.

In einer Ausgestaltung ist die Bauplatte uneben und die Bearbeitungsfläche wird als Ergebnis einer "best-fit" Berechnung definiert. Diese Ausgestaltung ermöglicht vorteilhafterweise die Verwendung von bereits vorherig genutzten Bauplatten, welche beispielsweise nicht notwendigerweise durch aufwendige mechanische Bearbeitung, insbesondere Fräsen, Erodieren oder hochpräzises Schleifen, für einen weiteren additiven Aufbauprozess geebnet wurden. Durch das Annähern der Bauplatte an die Beschichtungsvorrichtung des beschriebenen Verfahrens können Unebenheiten der Bauplatte berücksichtigt und beispielweise trotz der unebenen Bearbeitungsfläche der Bauplatte kann eine Kollision derselben mit der Beschichtungsvorrichtung verhindert werden.

Ein weiterer Aspekt der vorliegenden Erfindung betrifft ein Verfahren für den additiven Aufbau einer Struktur für ein Bauteil, umfassend das Fixieren einer vorgefertigten Komponente für das Bauteil in einer Fixierungsvorrichtung, derart, dass eine Trennebene der Komponente parallel zu einer Referenzoberfläche eines in der Fixierungsvorrichtung geführten Trägers ausgerichtet ist, beispielsweise einer Klemmfläche eines Stempels oder Kolbens als Träger.

Das Verfahren umfasst weiterhin das Erfassen eines Winkels zwischen der Bearbeitungsfläche bzw. Beschichtungsfläche und der Trennebene.

Das Verfahren umfasst weiterhin das Bereitstellen eines Pulverbettes aus einem Basismaterial für die Struktur.

Das Verfahren umfasst weiterhin das additive Aufbauen der Struktur auf der Bearbeitungsfläche, wobei zum Ausrichten der Bearbeitungsfläche, insbesondere relativ zu der Trennebene der Komponente, der Winkel entweder durch eine Messung oder durch Einlesen eines Codes (siehe oben) erfasst und für den additiven Aufbau berücksichtigt wird.

Dieses Verfahren kann - hinsichtlich des Ausrichtens der Bearbeitungsfläche und der Trennebene der Komponente - eine Alternativlösung zu dem weiter oben beschriebenen Verfahren darstellen.

Durch die beschriebenen Verfahren für den additiven Aufbau der Struktur werden insbesondere entschiedene Vorteile für eine Automatisierung bzw. Standardisierung additiver Herstellungsverfahren vorgestellt. Zusätzlich oder alternativ kann damit die Sicherheit, Effizienz und Qualität der beschriebenen Prozesse, insbesondere pulverbettbasierter additiver Herstellungsprozesse, sowie der entsprechend hergestellten Bauteile verbessert werden.

Im Zuge des industriellen Wandels zu immer dichteren Netzwerken zwischen Firmen und Kunden ("Internet der Dinge"), können die beschriebenen Verfahren weiterhin zunehmend genutzt werden, additive Herstellungsverfahren zu automatisieren, und/oder die entsprechend hergestellten Bauteile zu zertifizieren und eine entsprechende Datenerfassung zu automatisieren, und mithin "digitale Zwillinge" der Bauteile bereitzustellen.

In einer Ausgestaltung ist der Träger standardisiert und mit einem maschinenlesbaren Code versehen ist, wobei der Code von der Vorrichtung eingelesen werden kann.

In einer Ausgestaltung ist die Fixierungsvorrichtung auf der dem Träger abgewandten Seite transparent. Dies ermöglicht mit Vorteil die optische Vermessung des genannten Winkels (Kontaktwinkel) mittels einer Kamera.

In einer Ausgestaltung wird die Komponente in der Fixierungsvorrichtung durch ein, insbesondere transparentes, Füllmaterial fixiert. Diese Ausgestaltung ermöglicht zusätzlich zur Messbarkeit des Winkels, beispielsweise durch die genannte Messvorrichtung, eine zweckmäßige Fixierung des Bauteils.

In einer Ausgestaltung wird der Winkel mittels einer Kamera gemessen, indem der Träger, vorzugsweise um 360°, gedreht wird und weiterhin der kleinste Winkel zwischen der Komponente und dem Träger gespeichert wird.

Ein weiterer Aspekt betrifft ein computerlesbares Medium, Computerprogramm bzw. ein Computerprogrammprodukt, umfassend Befehle, die bei der Ausführung des Programms durch einen Computer oder eine Datenverarbeitungseinrichtung, diesen veranlassen, eine Information über die relative Lage der Trennebene der Komponente, d.h. relativ beispielsweise zu der Bearbeitungsfläche, in den Computer einzulesen und mittels eines CAM Verfahrens eine Schichtunterteilung ("slicen") der Struktur und/oder eine Festlegung von Bestrahlungsparametern, insbesondere Bestrahlungsvektoren, neu durchzuführen.

Ein weiterer Aspekt der vorliegenden Erfindung betrifft eine Messvorrichtung, welche an eine Beschichtungsvorrichtung zum Beschichten einer Bearbeitungsfläche für den additiven Aufbau gekoppelt ist, wobei die Messvorrichtung weiterhin zum schichtweisen optisches Vermessen der Oberfläche, wie oben beschrieben, ausgebildet ist.

Ein weiterer Aspekt betrifft eine Vorrichtung oder Fixierungsvorrichtung (wie oben beschrieben), umfassend einen Träger und eine zum linearen Führen des Trägers ausgebildete Führung, wobei der Träger standardisiert und mit einem maschinenlesbaren Code, beispielsweise einem QR-Code und/oder einem RFID-Code versehen ist. Ausgestaltungen, Merkmale und/oder Vorteile, die sich vorliegend auf das/die Verfahren beziehen, können ferner das Computerprogramm/Computerprogrammprodukt, die Messvorrichtung und/oder die Fixierungsvorrichtung betreffen, oder umgekehrt. Weitere Einzelheiten der Erfindung werden nachfolgend anhand der Figuren beschrieben.
- Figur 1: zeigt eine schematische Schnitt- oder Seitenansicht eines vorgefertigten Bauteils und eines Teils einer Beschichtungsvorrichtung.
- Figur 2: zeigt eine schematische Schnitt- oder Seitenansicht einer auf einer vorgefertigten Komponente aufgebauten Struktur.
- Figur 3: zeigt eine alternative schematische Schnitt- oder Seitenansicht einer auf einer vorgefertigten Komponente aufgebauten Struktur.
- Figur 4: zeigt eine schematische Schnitt- oder Seitenansicht einer vorgefertigten Komponente.
- Figur 5: zeigt eine schematische Schnitt- oder Seitenansicht einer Messvorrichtung.
- Figur 6: zeigt eine zur Figur 5 alternative schematische Schnitt- oder Seitenansicht einer Messvorrichtung.
- Figur 7: zeigt eine schematische Schnitt- oder Seitenansicht einer Vorrichtung mit einem Träger, in welcher eine Komponente fixiert ist.
- Figur 8: zeigt eine im Vergleich zur Figur 7 um 180° gedrehte Vorrichtung.
- Figur 9: zeigt eine zur Figur 8 alternative Ausgestaltung der Vorrichtung.
- Figur 10: zeigt in einer beispielhaften Ausgestaltung eine schematische Ansicht des Trägers der Figuren 7 bis 9.
- Figur 11: deutet anhand der Vorrichtung Verfahrensschritte eines erfindungsgemäßen Verfahrens an.
- Figuren 12 bis 17: deuten weiterhin Teile eines erfindungsgemäßen Verfahrens an.
- Figur 18: deutet zumindest einen Teil eines CAM-Verfahrens als Teil einer additiven Prozesskette an.
- Figuren 19 bis 21: deuten ähnlich zu Figur 18 Verfahrensschritte eines erfindungsgemäßen Verfahrens an.

In den Ausführungsbeispielen und Figuren können gleiche oder gleich wirkende Elemente jeweils mit den gleichen Bezugszeichen versehen sein. Die dargestellten Elemente und deren Grö-ßenverhältnisse untereinander sind grundsätzlich nicht als maßstabsgerecht anzusehen, vielmehr können einzelne Elemente, zur besseren Darstellbarkeit und/oder zum besseren Verständnis übertrieben dick oder groß dimensioniert dargestellt sein.

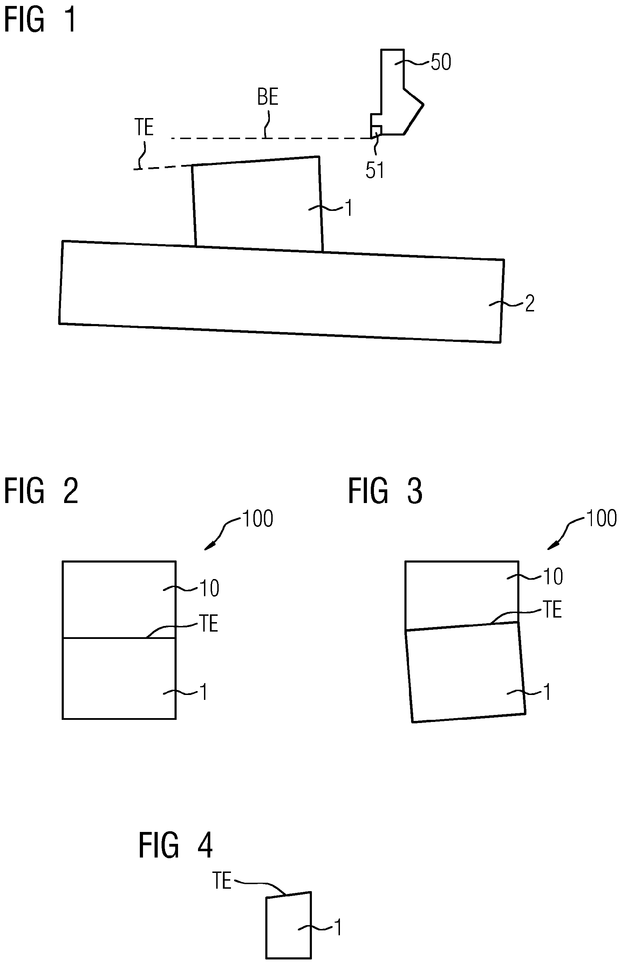

Figur 1 zeigt in einer schematischen Schnitt- oder Seitenansicht eine Bauplatte 2, auf der eine Komponente 1 angeordnet ist. Die Bauplatte 2 weist eine ebene Oberfläche (nicht explizit gekennzeichnet) auf. Die Komponente 1 ist auf der Oberfläche angeordnet, beispielsweise fixiert. Vorzugsweise wurde die Komponente 1 auf der Bauplatte 2 angeordnet, um durch ein pulverbett-basiertes Verfahren, insbesondere selektives Laserschmelzen oder Elektronenstrahlschmelzen, weiter aufgebaut oder auf diesem Wege mit einer Struktur (vergleiche Bezugszeichen 10 in den folgenden Figuren) versehen wurde.

In einer alternativen Ausgestaltung weist die Bauplatte 2 eine unebene, beispielsweise nicht hochpräzise geschliffene oder anderweitig bearbeitete Oberfläche auf, sodass die Ausrichtung der Komponente, sofern diese auf der Bauplatte 2 angeordnet ist, bei bekannter Geometrie der Komponente 1 relativ zu der Bauplatte nicht eindeutig festgelegt ist.

Die Komponente 1 weist einen Trennschnitt, eine Trennfläche, oder eine Trennebene TE auf. Die Trennebene TE wird oder wurde vorzugsweise durch einen mechanischen Bearbeitungsschritt freigelegt, bei dem beispielsweise ein verschlissener Teilbereich eines Bauteils 100 abgetragen wurde.

In den allermeisten Fällen, ist dieser Trennschnitt TE nicht parallel zu einer Grundfläche (nicht explizit gekennzeichnet) des Bauteils 100 bzw. der Komponente 1, welche vorliegend direkt an die Bauplatte 2 angrenzt. Es ist in Figur 1 zu erkennen, dass die Trennebene TE nicht parallel zu der Oberfläche der Bauplatte 2 verläuft. Weiterhin ist die Trennebene angestellt oder schließt einen von Null verschiedenen Winkel mit einer Bearbeitungsebene oder Bearbeitungsfläche BE ein. Die Bearbeitungsfläche BE kann beispielsweise durch einen Beschichter oder eine Beschichtungsvorrichtung 50 definiert werden.

Die Beschichtungsvorrichtung 50 weist weiterhin eine Rakel 51 auf, welche vorzugsweise in X- und/oder Y-Richtung über ein Pulverbett (vergleiche P in den folgenden Figuren) bewegt wird, um für den Aufbau der Struktur 10 eine neue Schicht Pulver oder Basismaterial aufzutragen.

Wenn beispielsweise ein Teil der Komponente 1 über die durch die gestrichelte Linie angedeutete Bearbeitungsebene, also beispielsweise aus dem Pulverbett hinausragt, droht eine Kollision des genannten Teilbereichs mit der Rakel 51, welche für den additiven Aufbau der Struktur (Beschichtung) beispielsweise von rechts nach links entlang der Bearbeitungsebene BE bewegt oder geführt wird.

Figur 2 zeigt eine Soll-Geometrie des Bauteils 100 in einer Seiten- oder Schnittansicht. Auf dem Bauteil 1 wurde vorzugsweise durch ein additives pulverbett-basiertes Verfahren (SLM oder EBM) die Struktur 10 aufgebaut, d.h. über die Trennebene TE metallurgisch mit der Komponente 1 verbunden. Die Figur 2 zeigt vorzugsweise eine ordnungsgemäße Ausrichtung der Struktur 10 auf der Komponente 1.

Figur 3 zeigt eine Geometrie oder einen Aufbau des Bauteils 100 bei mangelhafter Ausrichtung (Ist-Geometrie). Bei dem Bauteil 100 der Figur 3 ist beispielsweise die aufgebaute Struktur 10 ebenfalls über die Trennebene TE mit der Komponente 1 verbunden, wobei jedoch im Gegensatz zu Figur 2 der Aufbau derart erfolgte, dass die aufgebrachten Schichten nicht parallel zu der Trennebene TE verlaufen. Mit anderen Worten war eine mögliche Bearbeitungsebene BE nicht parallel zu der Trennebene TE ausgerichtet.

Figur 4 zeigt eine schematische Schnitt- oder Seitenansicht der Komponente 1, wobei der Trennschnitt TE (ähnlich zur Darstellung der Figur 1) mit einem von 0 und 90° verschiedenen Winkel zu den übrigen Oberflächen der Komponente 1 ausgerichtet ist.

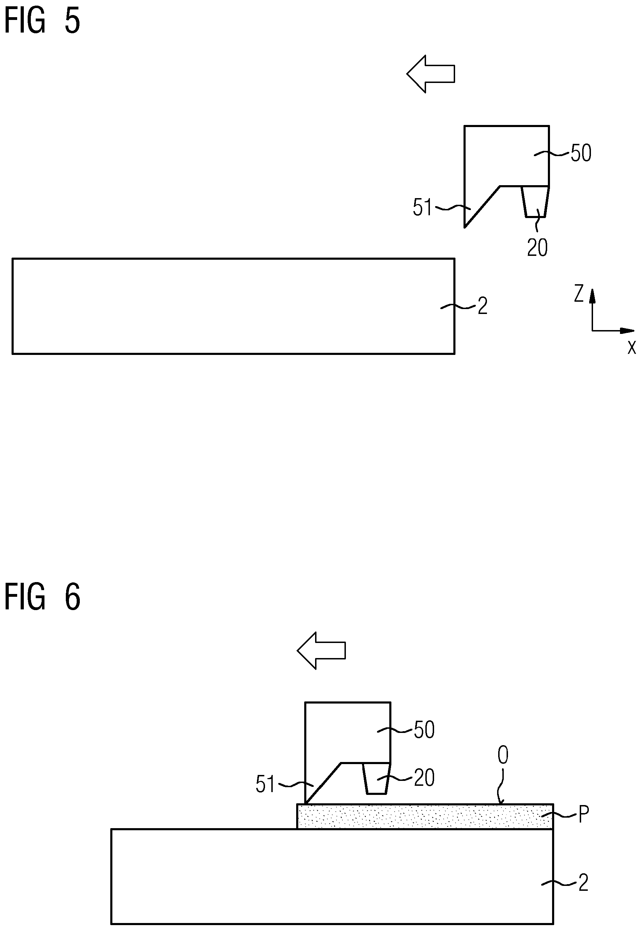

Figur 5 zeigt analog zur Darstellung der Figur 1 eine Bauplatte 2, und, beispielsweise in einer additiven Fertigungsvorrichtung (nicht explizit gekennzeichnet) implementiert, die erfindungsgemäße Beschichtungsvorrichtung 50. Die Beschichtungsvorrichtung 50 weist weiterhin eine Messvorrichtung 20 auf. Die Messvorrichtung 20 kann alternativ an die Beschichtungsvorrichtung 50 gekoppelt sein, wobei die Messvorrichtung 20 weiterhin zum schichtweisen optischen Vermessen der Oberfläche der Bauplatte bzw. eines auf der Bauplatte 2 angeordneten Pulverbettes ausgebildet ist. Die Messvorrichtung 20 kann beispielsweise weiterhin einen Streifenlicht-Scanner, einen Linienscanner, ein Infrarotscanner und/oder eine Thermographie-Einrichtung oder ähnliche Mittel, beispielsweise zum Vermessen der Schicht- oder Aufbauqualität, aufweisen. Die Messvorrichtung 20, bzw. der genannte Scanner ist vorzugsweise ausgebildet, Unebenheiten und/oder eine Topologie des Pulverbettes und der durch eine Bestrahlungsvorrichtung, einen Laser oder einen Elektronenstrahl, aufgeschmolzenen Bereiche zu ermitteln. Insbesondere kann bei einem Beschichtungsvorgang (die entsprechende Bewegung ist durch den nach links gerichteten Pfeil in Figur 5 angedeutet) eine Topologie des Pulverbettes (vorliegend nicht explizit gekennzeichnet) erfasst, und bei einer Rückbewegung (Bewegung von links nach rechts) eine Topologie des entsprechend umgeschmolzenen und/oder verdichteten Pulvers oder Basismaterials ermittelt werden. Durch diese Ausgestaltung kann eine Information jeder einzelnen Schicht der Struktur 10 für das Bauteil 100 (vergleiche Figuren 2 und 3) ermittelt und gespeichert werden, wobei gleichzeitig eine Früherkennung von Strukturfehlern, Schrumpfung oder Verzerrungen, nicht aufgeschmolzenen Bereichen, Fremdkörpern, Fehlstellen oder Stufen erfasst werden kann.

Die Beschichtungsvorrichtung 50 kann weiterhin eine Lichtschranke (nicht explizit gekennzeichnet) umfassen, mit deren Hilfe die Bauplatte (in einer entsprechenden Herstellungsanlage) an die Beschichtungsvorrichtung oder die Bearbeitungsebene angenähert werden kann. Insbesondere kann die Bauplatte 2 im Wege der genannten Annäherung nach oben, an die Bearbeitungsebene BE schrittweise angehoben werden, bis eine entsprechende Lichtschranke, welche in Figur 5 beispielweise in der Nähe der Rakel 51 eingerichtet ist, gestört wird.

Für die automatisierte Ausrichtung der Bauplatte 1 muss bei der ersten "Beschichterfahrt" eine Kollision vermieden werden. Die genannte Lichtschranke kann sicherstellen, dass zwischen Beschichterebene BE und Bauplatte 2 ein bestimmter Abstand nicht unterschritten wird, z.B. 10 mm. Alternativ oder zusätzlich können mehrere Lichtschranken für X- und Y-Richtung eingerichtet sein. Die Bauplatte 2 wird automatisch angehoben, bis das Signal der Lichtschranke die Bewegung stoppt. Ist nach dem Einbau der Platte die Lichtschranke gestört, wird automatisch abgesenkt bis der Abstand hergestellt ist und das Signal die Bewegung wieder anhält. Anschließend wird der Winkel in einer ersten Fahrt ermittelt.

Durch Rotation um X- und Y-Achse kann die Bauplatte parallel zur Bearbeitungsebene BE ausgerichtet werden. Eine zweite "Beschichterfahrt" (Rückbewegung) kann weiterhin die Ausrichtung kontrollieren.

Figur 6 zeigt eine Situation, in der ein Pulverbett P mit einer entsprechenden Oberfläche O auf der Oberfläche der Bauplatte 2 angedeutet ist. Die Oberfläche O wird beispielsweise gerade während eines Beschichtungsvorgangs durch die Messvorrichtung 20 optisch vermessen. Dies kann bei oder für jede oder jede zweite Schicht (vergleiche Bezugszeichen 11 in den folgenden Figuren) durch die Messvorrichtung 20 erfolgen.

Während des optischen Vermessens der Oberfläche des Pulverbettes P kann beispielsweise ein Code in der Trennebene TE der Komponente 1 optisch erkannt werden, wobei der Code eine Information über eine Geometrie und/oder Ausrichtung der Komponente 1 enthält. Diese Information kann alternativ oder zusätzlich von vornherein berücksichtigt werden, um eine Kollision zwischen einem Teil der Komponente oder Struktur 10 mit der Beschichtungsvorrichtung 50, insbesondere der Rakel 51, zu verhindern.

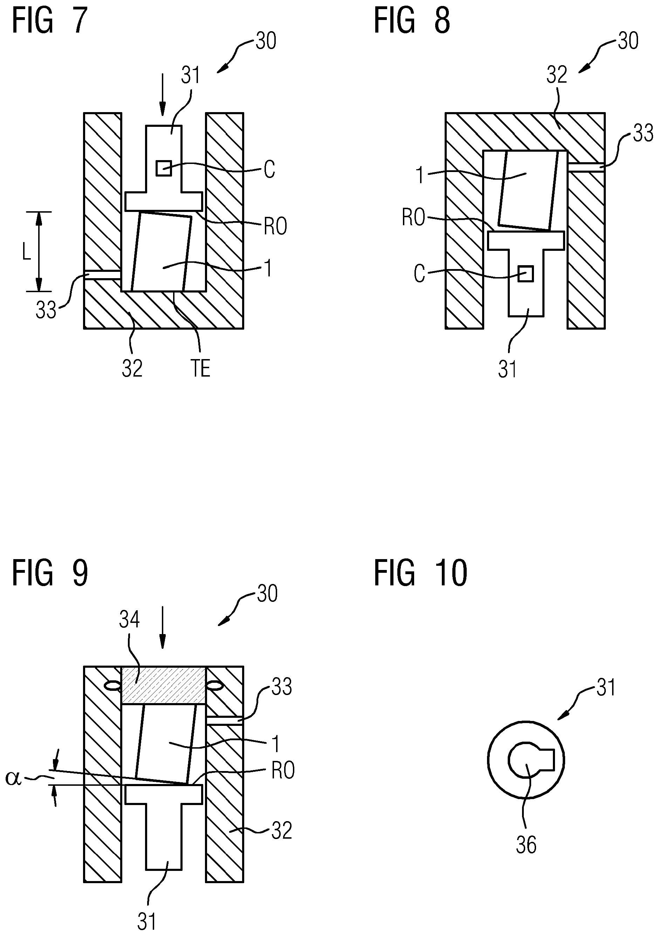

Figur 7 deutet einen weiteren Aspekt der vorliegenden Erfindung an. Es ist insbesondere eine Fixierungsvorrichtung oder Vorrichtung 30 gezeigt, mit welcher die Ausrichtung beispielsweise einer auf einem Bauteil oder einer vorgefertigten Komponente aufzubringenden Struktur zu verbessern. Mit anderen Worten kann die Ausrichtung von Trennebene TE und Bearbeitungfläche BE bzw. der Beschichtungsebene, wie oben beschrieben, vereinfacht und/oder automatisiert werden.

Die Messvorrichtung 30 umfasst einen Träger 31. Die Messvorrichtung 30 umfasst weiterhin eine Führung 32. Der Träger 31 ist vorzugsweise entlang einer ausgezeichneten Richtung (vorliegend vertikale Richtung) in der Führung beweglich angeordnet. Die Komponente 1 ist weiterhin in der Führung 32 angeordnet, sodass die Trennebene TE der Komponente 1 vorzugweise parallel zu einer Referenzoberfläche RO des Trägers 31 ausgerichtet ist. Die Trennebene TE der Komponente 1 entspricht vorliegend vorzugsweise der unteren Fläche der Komponente 1, d.h. der dem Träger gegenüberliegenden Seite (vergleiche Figur 7). Der Träger 31 fixiert oder klemmt die Komponente 1 vorzugsweise zumindest teilweise in der Führung 32 ein.

Der Träger 31 kann weiterhin standardisiert sein. Der Träger 31 ist vorzugsweise weiterhin mit einem maschinenlesbaren Code C, beispielsweise einem QR-Code und/oder einem RFID-Code versehen. Zweckmäßigerweise kann der genannte Code C über entsprechende Mittel von der Vorrichtung 20 eingelesen, und so der Träger 31 identifiziert werden.

Die Vorrichtung 30 kann weiterhin in einer Ausgestaltung einen transparenten Boden 34 oder eine auf der dem Träger 31 abgewandten Seite transparente Struktur haben. Dieser Boden kann beispielsweise aus Glas oder Acrylglas bestehen oder diese Materialien umfassen. Der Boden 34 ermöglicht es vorzugsweise weiterhin, einen im Trennschnitt TE eingebrachten Code (siehe oben) automatisch auszulesen, beispielsweise über eine integrierte Beleuchtung. Diese Information kann beispielsweise dem genannten Code des Trägers 31 zugeordnet und gelesen werden, insbesondere wenn eine Ausrichtung und Position des Trägers in der Vorrichtung 30 oder der Ausrichtungswinkel (s.o.) bekannt, und diese Information im Code enthalten ist.

Figur 8 zeigt eine Ausgestaltung, in der die Vorrichtung 30 relativ zu der Figur 7 um 180° gedreht wurde.

In Figur 9 ist eine weitere Ausgestaltung gezeigt. Gemäß dieser Ausgestaltung kann über eine Öffnung 33 ein Füllmaterial 37 in die Vorrichtung 30 eingebracht werden, um die Komponente 1 zu fixieren. Das Füllmaterial 37 wird vorzugsweise in die Vorrichtung 30 eingefüllt, um das Bauteil einzubetten.

Figur 10 zeigt eine Aufsicht oder Schnittansicht des Trägers 31, welcher mit einer Innenfläche 36 angedeutet ist. Über die Innenfläche 36, welche beispielsweise einer asymmetrischen oder von einer Zylinderform abweichenden Oberfläche entspricht, kann eine Rotationsbewegung des Trägers 31 beispielsweise vereinfacht durchgeführt werden.

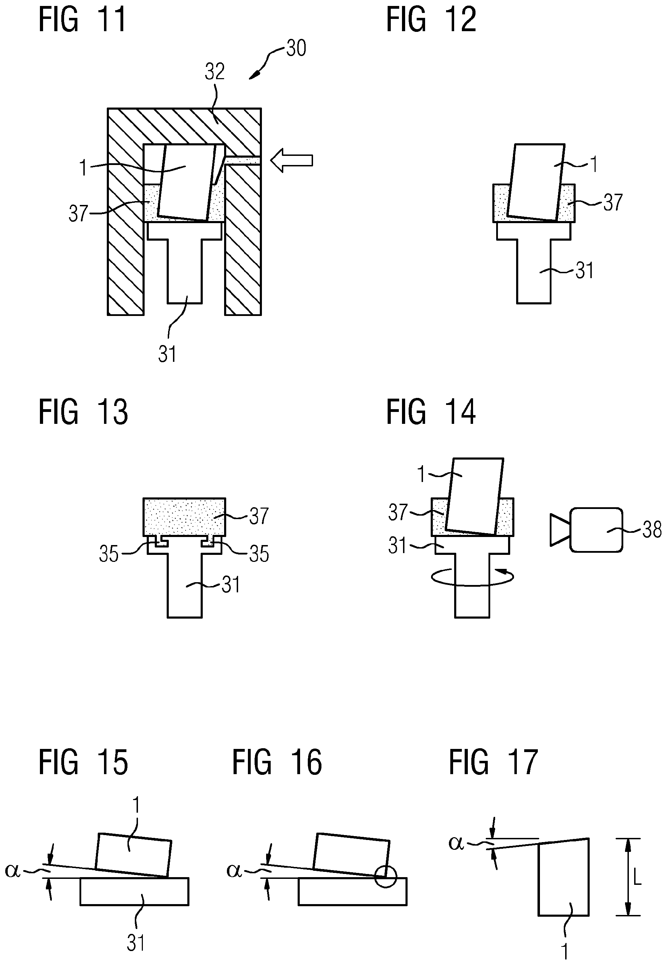

Das Einfüllen des Füllmaterials 37 in die Führung 32 ist weiterhin in Figur 11 durch den Pfeil nahe der Öffnung 33 angedeutet.

Nach einem Aushärten des Füllmaterials 37 können beispielsweise Träger 31 und das Bauteil bzw. die Komponente 1 aus der Führung 32 entnommen werden, was anhand von Figur 12, in der die Führung 32 nicht dargestellt ist, angedeutet ist.

Das Füllmaterial 37 kann weiterhin ein Epoxidharz sein. Es kann alternativ ein Material aufweisen, das beispielsweise über eine chemische Reaktion selektiv wieder entfernt werden kann.

Figur 13 zeigt in einer alternativen Ausgestaltung, dass die Komponente 1 weiterhin über eine Verhakung oder Haken 35, mit dem Träger 31 verbunden werden kann.

Über den transparenten Boden 34 ist es weiterhin möglich, einen Winkel α zwischen der Referenzoberfläche RO und eine an diese angrenzende Oberfläche der Komponente 1, vorzugsweise auf optischem Wege zu erfassen.

Der genannte Winkel α kann für einen weiteren additiven Aufbau einer Struktur auf der Komponente 1 einem Winkel zwischen der Trennebene TE und einer Bearbeitungsfläche (siehe oben) entsprechen.

Der Winkel α, wie beispielsweise anhand von Figur 14 dargestellt, auf optischem Wege, insbesondere über eine Kamera 38 erfasst werden. Der gebogene Pfeil in Figur 14 deutet an, dass der Träger 31 während der Vermessung des Winkels α, vorzugsweise um 360° gedreht wird, wobei weiterhin derjenige Winkel α, welcher der kleinsten Kontaktfläche (vergleiche Kreis in Figur 16) entspricht, gemessen und gespeichert wird.

Durch die Höhenmessung einer Länge L (siehe Figur 17), die Rotationswinkel und den Winkel α zur Kontaktfläche ist die Lage des Trennschnitts TE bestimmt und kann automatisch im System abgespeichert werden.

Figur 15 zeigt den Winkel α zwischen dem Träger 31 und der Komponente 1.

Figur 16 deutet eine Kontaktfläche (vgl. Kreis) zwischen dem Träger 31 und der Komponente 1 an.

In Figur 17 ist weiterhin der Winkel α und eine vertikale Länge L der Komponente 1 gekennzeichnet.

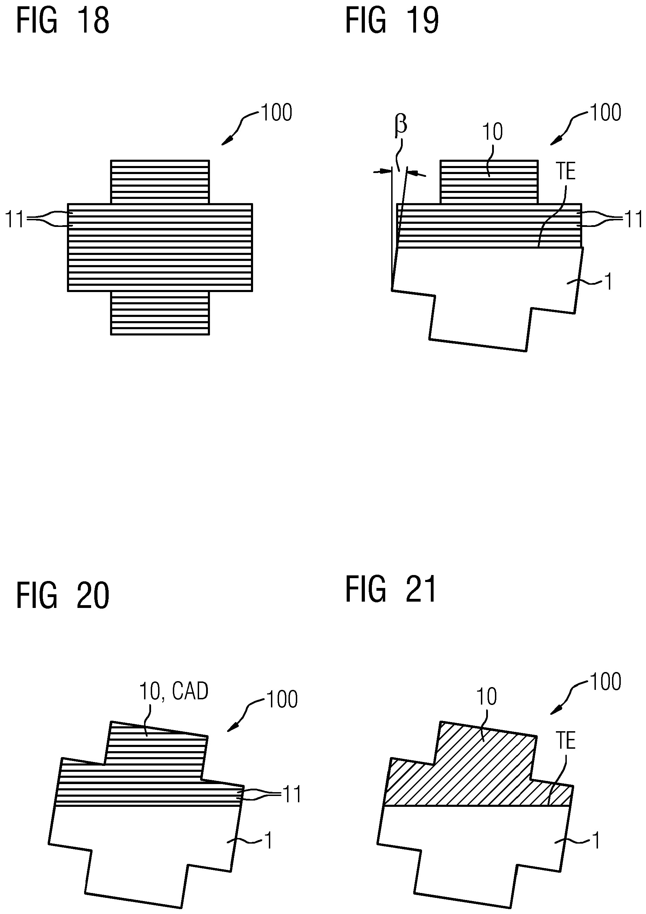

Figur 18 zeigt eine schematische Ansicht eines Bauteils 100, welches aus einer Mehrzahl von Schichten 11 zusammengesetzt ist.

Figur 19 zeigt eine schematische Schnitt- oder Seitenansicht des Bauteils 100 bzw. eines Modells des Bauteils.

Das Modell kann zumindest teilweise eine CAD-Datei und/oder eine CAM-Datei darstellen. Der untere Teil des gezeigten Bauteils ist ausgefüllt gekennzeichnet, was die oben beschriebene Komponente 1 andeuten soll. Der obere Teil des Bauteils 100 ist liniert, d.h. aus einzelnen Schichten 11 bestehend, angedeutet, wodurch ein CAM-Verfahren für die additive Herstellung, beispielsweise umfassend ein sogenanntes "slicen", illustriert werden soll. Es ist weiterhin zu erkennen, dass die Übergänge von dem unteren auf den oberen Teil und/oder Seitenwände des Bauteils 100 nicht gradlinig sind, sondern der untere Teil (Komponente) und der darauf aufgebaute und/oder modellierte obere Teil (Aufbau) nicht ordnungsgemäß ausgerichtet sind (vergleiche Figur 3). In Figur 19 ist weiterhin ein Winkel β eingezeichnet, welcher die mangelhafte Ausrichtung inzwischen der Komponente 1 und dem additiven Aufbau beziehungsweise der Struktur 10 oder entsprechende Hauptsymmetrieachsen andeutet. Der Winkel β kann beispielsweise maximal 3°, 5°, 10°, mehr oder weniger betragen.

Der genannte Winkel β kann beispielsweise in einer Software, einem Computerprogramm oder Computerprogrammprodukt vorgeschlagen, definiert und/oder gespeichert werden.

Vorzugsweise wird durch ein erfindungsgemäßes Verfahren, ab einem Winkel von β größer oder größer gleich 3° (bzw. 5° 10° oder mehr) - beispielsweise im Wege eines CAM- (Computer aided Manufacturing) Verfahrens - eine Schichtunterteilung für das Bauteil 100 (vergleiche Figur 18), insbesondere ein "Slicen" und Neuberechnen von Bestrahlungsvektoren automatisiert durchgeführt. Dies geschieht vorzugsweise derart, dass eine Bauteilqualität, beispielsweise Strukturqualität, Defektdichte, Heißrissbeständigkeit, nicht beeinflusst wird, was bei stark überhängenden Bereichen des Bauteils sonst der Fall sein könnte.

Ist beispielsweise die Lage des Trennschnitts TE bekannt und z.B. in einem Prozesskontroll- und Dokumentationssystem hinterlegt, so kann diese Information verwendet werden, um CAM-Dateien zu generieren. Alternativ kann eine 3D-Vermessung (Scan) des Bauteils 100 erfolgen und der Trennschnitt oder dessen Lage als Element ausgegeben werden. Dieses Element kann weiterhin als Aufbaufläche für den SLM-Prozess markiert werden. Aus der Information über die Aufbaufläche (Trennschnitt) und die Sollgeometrie des finalen Bauteils können die CAM-Dateien für den additiven (SLM)-Aufbau individuell generiert werden. Über den Neigungs- und Rotationswinkel der Komponente wird das Bauteil 100 vorzugsweise neu "geslict" bzw. in Schichten unterteilt (siehe oben). Über die Lage des Trennschnitts TE kann weiterhin die Schicht bestimmt werden, ab der der additive Aufbau der Struktur 10 erfolgen soll.

Mit dem beschriebenen Verfahren können im letzten Schritt im CAM-Verfahren für den Aufbau die X-Y-Position (laterale Position in einem Bauraum) und der gemäß der oben beschriebenen Mittel erfassten Winkel übernommen werden. Die benötigten Informationen können beispielsweise vorab in einer Datenbank hinterlegt werden.

Insbesondere kann das beschriebene Verfahren, welches in einem Computerprogramm implementiert und dessen Ergebnis durch ein Computerprogrammprodukt beschrieben werden kann, Befehle umfassen, die einen Computer veranlassen, eine Information über die relative Lage der Trennebene TE der Komponente 1 in den Computer oder die Datenverarbeitungseinrichtung (nicht explizit gekennzeichnet) einzulesen und mittels eines CAM-Verfahrens eine Schichtunterteilung 11 der Struktur 10 und/oder eine Festlegung von Bestrahlungsparametern neu durchzuführen.

In Figur 20 ist insbesondere im Gegensatz zu Figur 19 zu erkennen, dass das Bauteil 100 bzw. ein CAD-Modell desselben, welches vorliegend ohne Beschränkung der Allgemeinheit oder Geometriefreiheit des Bauteils 100 kreuzähnlich dargestellt ist, gerade Seitenflächen aufweist. Die in Figur 20 gezeigte Schichtunterteilung der Schichten 11 ist vorzugsweise bezogen auf eine äußere Kontur der Struktur 10 von derjenigen aus Figur 19 verschieden. Gemäß dem beschriebenen Verfahren wurde also die Schichtunterteilung neu definiert (siehe oben).

Figur 21 zeigt im Gegensatz zu Figur 19 eine erfindungsgemäße Ausrichtung zwischen der Komponente 1 und der Struktur 10 (Sollgeometrie). Das Bauteil 100, welches in Figur 20 gezeigt ist, wurde vorzugsweise unter Zuhilfenahme der vorliegend beschriebenen Prozesse (nach der Modellierung oder CAD- Konstruktion) auch additiv aufgebaut. Das Bauteil 100 umfasst, wie oben beschrieben, die Komponente 1 und die (additiv aufgebaute) Struktur 10. Der obere Abschnitt der Struktur ist mit einer anderen Schraffur gekennzeichnet, als der untere Bereich. Es ist ferner zu erkennen, dass der beschriebene Winkel β gleichen 0 ist. Mit anderen Worten ist die Ausrichtung - im Vergleich zu derjenigen, welche in Figur 19 angedeutet ist - optimal erfolgt.

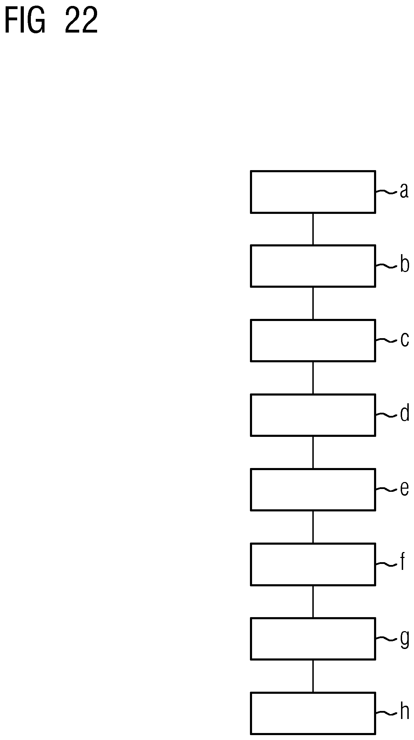

Die vorliegenden erfindungsgemäßen Verfahren, welche insbesondere alternative Lösungen zur Erfassung eines Winkels darstellen (siehe oben) sind insbesondere für den additiven Aufbau der Struktur 10 für das Bauteil 100 vorgesehen und können die folgenden Schritte/Merkmale umfassen (vergleiche Figur 22) :
- a) Bereitstellen der vorgefertigten Komponente 1 für das Bauteil 100 auf einer Bauplatte 2, wobei die Komponente 1 eine Trennebene TE aufweist,
- b) Bereitstellen eines Pulverbettes P aus einem Basismaterial für die Struktur 10,
- c) Annähern der Bauplatte 2 an eine Beschichtungsvorrichtung 50,
- d) Ausrichten einer Bearbeitungsfläche BE und der Trennebene TE der Komponente 1 zum Verhindern einer Kollision zwischen der Komponente (1) und der Beschichtungsvorrichtung 50, und
- e) optisches Vermessen einer Oberfläche O des Pulverbettes.

Weiterhin können folgende Verfahrensschritte umfasst sein:
- f) Fixieren einer vorgefertigten Komponente 1 für das Bauteil 100 in einer Fixierungsvorrichtung 30, derart, dass eine Trennebene TE der Komponente 1 parallel zu einer Referenzoberfläche RO eines in der Fixierungsvorrichtung 10 geführten Trägers 31 ausgerichtet ist,
- g) Erfassen eines Winkels α zwischen einer Bearbeitungsfläche BE und der Trennebene TE, und
- h) additives Aufbauen der Struktur 10 auf der Bearbeitungsfläche BE, wobei zum Ausrichten der Bearbeitungsfläche BE, insbesondere relativ zu der Trennebene TE der Komponente 1, der Winkel α entweder durch eine Messung oder durch Einlesen eines Codes C erfasst und für den additiven Aufbau berücksichtigt wird.

## Patentansprüche

1. Verfahren für den hybriden additiven Aufbau einer Struktur (10) für ein Bauteil (100), wobei mittels selektiven Laserschmelzens oder Elektronenstrahlschmelzens die Struktur auf einer vorgefertigten Komponente aufgebaut wird, umfassend die folgenden Schritte:
- Bereitstellen einer vorgefertigten Komponente (1) für das Bauteil (100) auf einer Bauplatte (2), wobei die Komponente (1) eine Trennebene (TE) aufweist, welche für den additiven Aufbau der Struktur herangezogen wird,
- Bereitstellen, auf der Bauplatte, eines Pulverbettes (P) aus einem Basismaterial für die Struktur (10),
- Annähern der Bauplatte (2) an eine Beschichtungsvorrichtung (50),
- Ausrichten einer Bearbeitungsfläche (BE) und der Trennebene (TE) der Komponente (1) zum Verhindern einer Kollision zwischen der Komponente (1) und der Beschichtungsvorrichtung (50), und
- schichtweises optisches Vermessen einer Oberfläche (O) des Pulverbettes während des additiven Aufbaus der Struktur (10).

2. Verfahren gemäß Anspruch 1, wobei die Oberfläche (O) während der Beschichtung der Bearbeitungsfläche (BE) mit dem Basismaterial (P) durch die Beschichtungsvorrichtung (50) vermessen wird.

3. Verfahren gemäß einem der vorhergehenden Ansprüche, wobei zum Ausrichten ein Winkel (α) zwischen der Bearbeitungsfläche (BE) und der Trennebene (TE) ermittelt wird.

4. Verfahren gemäß Anspruch 3, wobei der Winkel durch das optische Vermessen eines beispielsweise aus der Bearbeitungsfläche (BE) herausragenden Teils der Komponente (1) ermittelt wird.

5. Verfahren gemäß einem der vorhergehenden Ansprüche, wobei das Annähern der Bauplatte (2) mittels einer Lichtschranke durchgeführt und die Bauplatte (2) schrittweise angehoben wird, bis die Lichtschranke gestört wird.

6. Verfahren gemäß einem der vorhergehenden Ansprüche, wobei während des Vermessens ein Code (C) in der Trennebene (TE) der Komponente (1) optisch erkannt wird, und wobei der Code (C) eine Information über eine Geometrie und/oder Ausrichtung der Komponente (1) enthält.

7. Messvorrichtung (20), welche an eine Beschichtungsvorrichtung (50) zum Beschichten einer Bearbeitungsfläche (BE) für den additiven Aufbau gekoppelt ist, wobei die Messvorrichtung (20) weiterhin zum schichtweisen optischen Vermessen der Oberfläche (O) gemäß einem der Ansprüche 1 bis 6 ausgebildet ist.

## Claims

1. Method for the hybrid additive construction of a structure (10) for a component (100) wherein the structure is constructed on a prefabricated part by means of selective laser melting or electron beam melting, comprising the following steps:
- providing a prefabricated part (1) for the component (100) on a construction plate (2), the part (1) comprising a separating plane (TE) which is used for the additive construction of the structure,
- providing, on the construction plate, a powder bed (P) consisting of a base material for the structure (10),
- approaching the construction plate (2) to a coating device (50),
- orientating a processing face (BE) and the separating plane (TE) of the part (1) in order to prevent a collision between the part (1) and the coating device (50), and
- optically measuring a surface (O) of the powder bed layer-by-layer during the additive construction of the structure (10).

2. Method according to Claim 1, wherein the surface (O) is measured during the coating of the processing face (BE) with the base material (P) by the coating device (50).

3. Method according to any of the preceding claims, wherein an angle (α) between the processing face (BE) and the separating plane (TE) is determined for the orientation.

4. Method according to Claim 3, wherein the angle is determined by the optical measurement of for example a portion, protruding from the processing face (BE), of the part (1) .

5. Method according to any of the preceding claims, wherein the approaching of the construction plate (2) is carried out by means of a photoelectric barrier, and the construction plate (2) is raised stepwise until the photoelectric barrier is broken.

6. Method according to any of the preceding claims, wherein a code (C) in the separating plane (TE) of the part (1) is optically identified during the measurement, and wherein the code (C) contains information about a geometry and/or an orientation of the part (1).

7. Measuring device (20) which is coupled to a coating device (50) for coating a processing face (BE) for the additive construction, wherein the measuring device (20) is furthermore configured for layer-by-layer optical measurement of the surface (O) according to any of Claims 1 to 6.

## Revendications

1. Procédé de construction additive hybride d'une structure (10) d'une pièce (100), dans lequel on construit la structure sur un composant préfabriqué au moyen d'une fusion laser sélective ou d'une fusion par faisceau d'électrons, comprenant les stades suivants :
- on se procure un composant (1) préfabriqué pour la pièce (100) sur un plateau (2) de construction, dans lequel le composant (1) a un plan (TE) de séparation dont on tire parti pour la construction additive de la structure,
- on se procure, sur le plateau de construction, un lit (P) de poudre en un matériau de base pour la structure (10),
- on rapproche le plateau (2) de construction d'un dispositif 50) de revêtement,
- on oriente une surface (BE) de traitement et le plan (TE) de séparation du composant (1) pour empêcher une collision entre le composant (1) et le dispositif (50) de revêtement, et
- on mesure optiquement couche par couche une surface (O) du lit de poudre pendant la construction additive de la structure (10).

2. Procédé suivant la revendication 1, dans lequel on mesure la surface (O) pendant le revêtement de la surface (BE) de traitement du matériau (P) de base par le dispositif (50) de revêtement.

3. Procédé suivant l'une des revendications précédentes, dans lequel on détermine pour l'orientation un angle (α) entre la surface (BE) de traitement et le plan (TE) de séparation.

4. Procédé suivant la revendication 3, dans lequel on détermine l'angle par la mesure optique d'une partie du composant (1), faisant par exemple saillie de la surface (BE) de traitement.

5. Procédé suivant l'une des revendications précédentes, dans lequel on effectue le rapprochement du plateau (2) de construction au moyen d'une cellule photoélectrique, et on soulève pas à pas le plateau (2) de construction jusqu'à la perturbation de la cellule photoélectrique.

6. Procédé suivant l'une des revendications précédentes, dans lequel, pendant la mesure, on détecte optiquement un code (C) dans le plan (TE) de séparation du composant (1), et dans lequel le code (C) contient une information sur une géométrie et/ou une orientation du composant (1).

7. Dispositif (20) de mesure, qui est couplé à un dispositif (50) de revêtement pour le revêtement d'une surface (BE) de traitement pour la construction additive, dans lequel le dispositif (20) de mesure est constitué, en outre, pour la mesure optique couche par couche de la surface (O) suivant l'une des revendications 1 à 6.
